# EUROPEAN PATENT APPLICATION

(11) **EP 2 485 435 A1**
(43) Date of publication of application: **08.08.2012**
(21) Application number: 11290062.6
(22) Date of filing: 31.01.2011
(51) Int. Cl.: H04L 12/28, H04L 1/00

(54) **A home network physical layer configuration platform and method**

(71) Applicant: Alcatel Lucent, 75007 Paris (FR)
(72) Inventor: Drooghaag, Benoît, 1421 Ophain-Bois-Seigneur-Isaac (BE)
(74) Representative: Plas, Axel Ivo Michel

(57) **Abstract**

A home network physical layer configuration platform according to the invention comprises:
- a collection engine for receiving information indicative for the stability of an existing home network physical layer configuration from one or more home network devices;
- a configuration parameter determination engine for determining the optimal values of one or more home network physical layer configuration parameter; and
- a configuration parameter setting engine for setting one or more home network physical layer configuration parameter with the optimal values determined.

## Description

### Field of the Invention

The present invention generally relates to configuration of the physical layer of home networks. The invention in particular provides a solution to deal with the poor quality and interference immunity of in-house available physical media such as twisted pair phone wires, electrical power wires or coax cables, as well as wireless techniques, that are used to interconnect home devices via a home network and a home network gateway to the Internet.

### Background of the Invention

Traditional residential Internet connectivity consists of a single voice-band modem, a Digital Subscriber Line or DSL modem, or a coax-cable modem, connected to a computer in the house. As a result of new applications and technologies such as digital television, on-line gaming and home automation, the Internet access needs to be extended to other home devices such as a set-top box, a game console, a home automation system, plural desktops or laptops, etc. A home network must be setup and configured to interconnect all those home devices. This home network shall access the Internet via a home network gateway or residential gateway that is connected to the access network via a traditional DSL modem or coax-cable modem.

Since it is usually too cumbersome for residential users to install new, qualitative wiring between the home network gateway and the various home devices that require Internet access, the home network is typically relying on existing in-house media such as twisted pair phone wires, electrical power wires and/or coax cables. This is in particular the case in renovation projects. Also, wireless technologies like WiFi may be used in the home network.

Whatever the choice, the in-house available media typically result in a low quality physical layer offering poor immunity for interference in-house or in-between neighbouring houses. Twisted pair phone wires are usually slightly twisted. Electrical power wires typically consist of low category cable that is not twisted at all. As a result, these existing media are usually very sensitive to various kinds of noise.

In order to deal with the poor quality of the home network's physical layer, robust modulation schemes such as Orthogonal Frequency-Division Multiplexing or OFDM are deployed.

In addition forward error correction or FEC mechanisms such as Reed Solomon encoding or Low Density Parity Check codes are used on top of the home network physical layer to increase the robustness for transmission errors. Such FEC mechanisms generally add redundancy to the data stream and consequently have an impact on the performance or useful bit rate. Although the quality of in-house media and noise conditions can differ strongly from one place to another, these error correction mechanisms are typically statically configured to survive the worst case noise conditions thus privileging stability of the home network's physical layer to the detriment of performance.

It is an objective of the present invention to disclose a home network physical layer configuration platform and method that overcome the above mentioned drawbacks of existing solutions. More particularly, it is an objective to disclose such platform and method that enables to use existing in-house media such as telephone wires, electrical power wires and coax cables to realize a stable home network that does not unnecessarily impact the performance or achievable bit rate.

### Summary of the Invention

According to the present invention, the above defined objective is realized by a home network physical layer configuration platform as defined by claim 1, comprising:
- a collection engine adapted to receive information indicative for stability of an existing home network physical layer configuration from one or more home network devices;
- a configuration parameter determination engine, responsive to the collection engine and adapted to determine values of one or more home network physical layer configuration parameter based on the information; and
- a configuration parameter setting engine, adapted to set one or more home network physical layer configuration parameter with the values determined by the configuration parameter determination engine.

Thus, the underlying idea of the current invention consists in adapting the configuration of the home network physical layer individually and dynamically for each environment. This is done by assessing the stability of the existing home network physical layer and dynamically determining and setting the optimal configuration parameter values of home network devices to automatically find the best trade-off between stability and performance of the home network taking into account the specific environment.

This way, the platform according to the invention avoids oversized forward error correction (FEC) resulting a in global increase of the available bit rate in home networks while guaranteeing a quality of service enabling QoS critical applications such as digital television. An indirect advantage of the current invention is that it will increase end user satisfaction and reduce the amount of calls to operator helpdesks related to home networking problems.

In addition to a home network physical layer configuration platform as defined by claim 1, the current invention also relates to a corresponding home network physical layer configuration method, as defined by claim 9. This method comprises the steps of:
- receiving information indicative for stability of an existing home network physical layer configuration from one or more home network devices;
- determining values of one or more home network physical layer configuration parameter based on the information; and
- setting one or more home network physical layer configuration parameter with the values determined by the configuration parameter determination engine.

Optionally, as defined by claim 2, the home network physical layer configuration platform according to the current invention may assess the stability of the home network's physical layer by monitoring parameters such as:
- a bit error rate or BER;
- a noise level;
- a signal to noise ratio or SNR;
- a channel attenuation;
- etc.
It is noticed that this list is non-exhaustive.

Indeed, changing bit error rates or noise levels may indicate varying stability of the home network's physical layer, hence requiring re-calculation and re-setting certain configuration parameters of home network devices.

Further optionally, as defined by claim 3, the home network physical layer configuration parameter that is configured by the platform according to the present invention may comprise a redundancy level.

Indeed, typical configuration parameters of home network devices shall represent a redundancy level for the data transmission in the home network. Increasing the stability of the home network by increasing the redundancy level consequently shall reduce the effective bit rate achievable in the home network.

As further specified by claim 4, the one or more home network physical layer configuration parameters that are configured by the platform according to the present invention may comprise one or more of:
- a forward error correction or FEC code rate;
- an Automatic Repeat reQuest or ARQ enable/disable parameter;
- a frequency band plan or channel;
- frequency notches;
- a transmitted signal power level;
- etc.
Again, it is noticed that this list is non-exhaustive.

By configuring the forward error correction or FEC code rate, the redundancy ratio may be adapted to automatically find the best trade-off between stability and performance. Enabling/disabling re-transmission also has an impact on the redundancy and the delay. In addition, the frequency band plan or channel may be selected to adapt to the specific noise environment, and frequency notching may help to avoid interference with with radio amateurs in the neighbourhood. These parameters or a selection thereof may be set individually for each home networking device based on the data collected directly from these home networking devices. To observe the noise conditions and automatically track the optimal settings, a feedback loop may be implemented.

Preferably, as is indicated by claim 5, the collection engine, configuration parameter determination engine, and configuration parameter setting engine are controlled to iteratively retrieve information, determine values of one or more home network physical layer configuration parameters and set the home network physical layer configuration parameters.

Indeed, to observe the noise conditions and automatically track the optimal settings, a feedback loop may be implemented. This feedback mechanism can follow a pure trial-and-error approach, e.g. the FEC code rate may be decreased step by-step as long as transmission errors occur, or an intelligent algorithm can be used to find the optimal parameter configurations immediately, making the convergence of the feedback loop faster.

As is indicated by claim 6 and claim 7, the home network physical layer configuration platform according to the current invention may be integrated in a home network gateway or alternatively in a remote unit, e.g. a remote network management application for instance under control of the access network operator or service provider.

As is further indicated by claim 8, the home network physical layer configuration platform according to the current invention may be adapted for use in a G.hn home network.

The G.hn or ITU-T 9660 Recommendation is a standard specification for wired home networks that covers twisted pair phone lines, electrical power wires and coax cables as possible media for in-house data transmission. The current invention would enable to access G.hn devices and configure certain physical layer parameters like the FEC code rate, the ARQ parameter, the frequency band plan and frequency notches through IP based management protocols like SNMP or TR-069.

### Brief Description of the Drawings

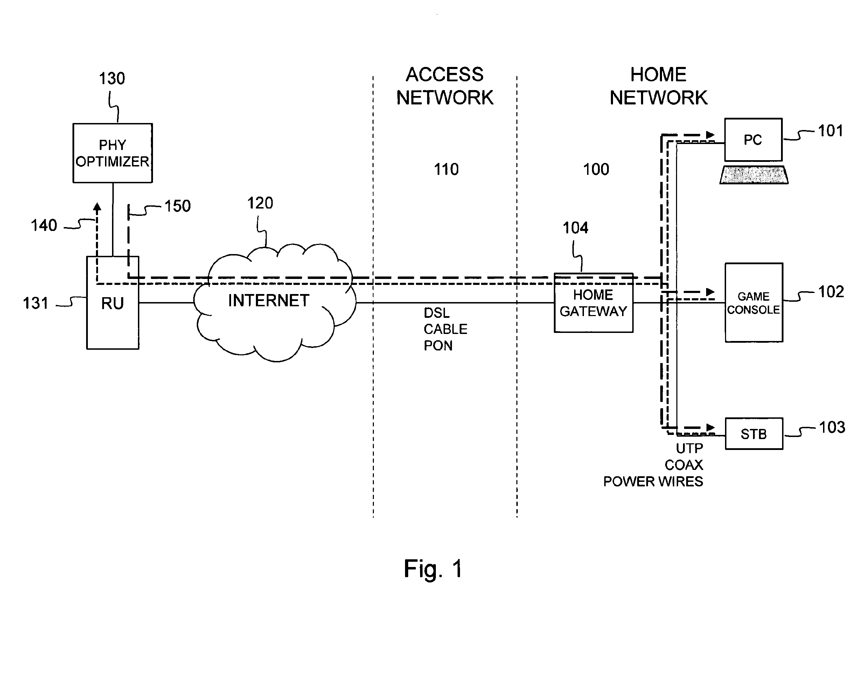

Fig. 1 illustrates a home network wherein an embodiment of the home network physical layer configuration platform according to the present invention is used.

### Detailed Description of Embodiment(s)

Fig. 1 shows a home network 100 with a computer 101, game console 102 and digital television set-top box 103 connected to the Internet 120 via a residential gateway 104 and access network 110. The home devices 101, 102 and 103 are supposed to be ITU-T G.hn compliant. Fig. 1 further shows a platform according to the present invention, i.e. application 130 running on a remote server to optimize the home network's physical layer configuration parameters in order to dynamically and automatically find the best trade-off between stability and performance for the home network 100. More particularly, application 130 automatically controls the frequency band selection, frequency notches, the FEC code rates and ARQ optimization for the G.hn compliant devices 101, 102 and 103. The application 130 thereto collects stability and QoS metrics 140 from the home network devices 101, 10 and 103, and generates and sets the optimal physical layer configuration parameter values 150.

ITU-T G.hn or ITU-T 9660 recommendation is a standard specification for wired home networking that covers twisted pair phone lines, electrical power lines and coax cables as possible media for in-house transmission of data. This standard specification defines a common modulation scheme, i.e. FFT-based OFDM, and a common data link layer protocol. Some parameters of the modulation, like the carrier spacing, are media dependent: 195.31 kHz carrier spacing on coaxial cables, 48.82 kHz carrier spacing on phone lines, 24.41 kHz carrier spacing on electrical power lines. Other parameters can be set independently of the medium type. Those parameters are configured by the operator or the end-user. Once set, the chipset in the home device(s) is not allowed to change them.

A first configuration parameter that will be configured by application 130 is the FEC code rate. The forward error correction algorithm of ITU-T G.hn is based on Low-Density Parity-Check coding, and can be configured with code rates of 1/2, 2/3, 5/6, 16/18 or 20/21. Low code rates that introduce a lot of redundancy will be used in very noisy environments, i.e. when the noise level measured in home network 100 and reported by the home network devices to application 130 exceeds a certain threshold, and higher code rates that introduce low redundancy will be used in when the noise level measured in the home network 100 remains low.

Further, application 130 configures the Automatic Repeat reQuest parameter supported by the ITU-T G.hn standard. The ARQ parameter will be enabled or disabled depending on the noise level measured in the home network 100 and reported to the application 130. Enabling the ARQ parameter shall have a negative impact on both the delay and bit rate, i.e. delay shall increase and bit rate shall decrease. Therefore, configuring the ARQ parameter may be balanced against controlling the FEC code rate.

For each medium, the ITU-T G.hn standard offers different band plans: 50 MHz - TB and 100 MHz - TB for twisted pair phone lines; 50 MHz - PB, 100 MHz - PB and 100 MHz - PB for electrical power lines; 50 MHz - CB, 100 MHz - CB, 50 MHz - CRF and 100 MHz - CRF for coax cables. Depending on the noise level measured in home network 100 and reported to application 130, the latter application 130 shall select and set the frequency band plan for each one of the home devices 101, 102 and 103.

Further, frequency notching is foreseen to avoid interference with amateur radio bands. The choice of the notches in home network 100 is also adapted by application 130 to the noise environment sensed and reported by the home devices to the application 130.

One embodiment of the current invention in other words automatically sets the optimal FEC code rate, ARQ parameter, band plan and notches for the G.hn devices 101, 102 and 103, based on the data collected from those ITU-T G.hn devices directly. A feedback loop is implemented to automatically track the optimal settings based on the observed noise conditions, and set those optimal settings directly in the G.hn devices 101, 102 and 103. The feedback mechanism can be a pure trial-and-error approach, e.g. the FEC code rate is decreased step-by-step as long as transmission errors occur, or an intelligent algorithm in application 130 can determine the optimal settings directly, making the convergence of the feedback loop faster.

It is noticed that the information collection and home network physical layer configuration platform according to the current invention can be implemented in different locations such as the home gateway 104 or a completely remote location 131 accessing the G.hn devices 101, 102, 103 though IP-based management protocols such as SNMP or TR-069.

Although it is possible to implement the current invention based on a proprietary interface that is shared with chipset vendors, having a standardized interface to retrieve the stability-related parameters, e.g. error counters, noise level, etc., would facilitate the use of the invention in a multi-vendor environment.

Some of the parameters defined in TR-098, especially the ones related to the HPNA, UPA, MoCA and HomePlugAV QoS, can be used as input for the present invention. In the future, it would be interesting to extend this parameter set to improve the diagnosis capability, and to make it available to other upcoming technologies such as G.hn.

It is further noticed that although the invention has been described with a focus on wired home networks, wireless technologies are covered as well. Conceptually, the invention is applicable to different home-networking technologies, both wired and/or wireless. The stability optimizer engine, wherein the feedback loop is closed, can be implemented in different locations: in the residential gateways or in a remote network-management application.

A second embodiment of the home network physical layer configuration platform according to the invention could implement automatic selection of the best WiFi channel. Today, wireless chipsets are allowed to select the channel autonomously. However, it is often reported that some of them don't always choose the best one, or just select the first allowed channel without taking into account the noise condition. This results in sub-optimal bit rates and network congestions, i.e. too many nodes on the same channel. An embodiment of the present invention could allow only a single channel for every node of the same wireless network, and select this channel based on the noise measured in all channels. Hence, the chipset may not autonomously choose the wireless channel anymore and is obliged to choose the only one that is allowed by the remote application or application running on the residential gateway. A further advantage thereof is that the application according to the current invention could prevent multiple wireless networks in the same house from using the same channel, by forcing them to choose a different one.

Although the present invention has been illustrated by reference to a specific embodiment, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A home network physical layer configuration platform comprising:
- a collection engine adapted to receive information indicative for stability of an existing home network physical layer configuration from one or more home network devices;
- a configuration parameter determination engine, responsive to said collection engine and adapted to determine values of one or more home network physical layer configuration parameter based on said information; and
- a configuration parameter setting engine, adapted to set said one or more home network physical layer configuration parameter with said values determined by said configuration parameter determination engine.

2. A home network physical layer configuration platform according to claim 1, wherein said information comprises one or more of:
- a bit error rate or BER;
- a noise level;
- a signal to noise ratio or SNR; and
- a channel attenuation.

3. A home network physical layer configuration platform according to claim 1, wherein said one or more home network physical layer configuration parameter comprises a redundancy level.

4. A home network physical layer configuration platform according to claim 1, wherein said one or more home network physical layer configuration parameter comprises one or more of:
- a forward error correction or FEC code rate;
- an Automatic Repeat reQuest or ARQ enable/disable parameter;
- a frequency band plan or channel;
- frequency notches; and
- a transmitted signal power level.

5. A home network physical layer configuration platform according to claim 1,
wherein said collection engine, said configuration parameter determination engine, and said configuration parameter setting engine are controlled to iteratively retrieve said information, determine values of said one or more home network physical layer configuration parameters and set said one or more home network physical layer configuration parameters.

6. A home network physical layer configuration platform according to claim 1, said home network physical layer configuration platform being integrated in a home network gateway.

7. A home network physical layer configuration platform according to claim 1, said home network physical layer configuration platform being integrated in a remote unit.

8. A home network physical layer configuration platform according to claim 1, said home network physical layer configuration platform being adapted for use in a G.hn home network.

9. A home network physical layer configuration method comprising the steps of:
- receiving information indicative for stability of an existing home network physical layer configuration from one or more home network devices;
- determining values of one or more home network physical layer configuration parameter based on said information; and
- setting said one or more home network physical layer configuration parameter with said values determined by said configuration parameter determination engine.
